# EUROPEAN PATENT APPLICATION

(11) **EP 1 073 263 A1**
(43) Date of publication of application: **31.01.2001**
(21) Application number: 00306358.3
(22) Date of filing: 26.07.2000
(51) Int. Cl.: H04N 5/00

(54) **Acquiring data from a bitstream**

(30) Priority: 28.07.1999 US 146070 P
(71) Applicant: Sarnoff Corporation, Princeton, NJ 08543-5300 (US)
(72) Inventor: Fedele, Nicola John, Kingston, NJ 08528 (US); Bunting, Richard Michael, Hamilton, NJ 08690 (US); Burns, Daniel John, Aliso Viejo, CA 92656 (US); Kanamaluru, Sridhar, West Windsor, NJ 08550 (US)
(74) Representative: Pratt, Richard Wilson

(57) **Abstract**

A method an apparatus acquires and extracts digital data from a bitstream, e.g. an MPEG-2 bitstream, that is modulated in an 8 VSB, QAM or QPSK format. The method and apparatus efficiently parses the extracted digital information in order to store only the pertinent bytes on a hard storage medium or a personal computer (PC)

## Description

The present invention relates to an apparatus and method for digital data processing. Embodiments of the invention relate to a method and apparatus that acquires data from a bitstream of for example compressed data, such as an MPEG bitstream.

### BACKGROUND OF THE DISCLOSURE

With the ever-increasing proliferation of digital information, the concept of broadcasting digital information has gained wide acceptance. This transformation has presented both opportunities and challenges in receiving information in digital format.

Specifically, many television studios and stations are proceeding toward the goal of broadcasting many programs via digital television signals. Standards such as the Advanced Television System Committee (ATSC) and the Moving Picture Experts Group (MPEG) are examples of standards that have contributed greatly toward this goal. As infrastructures are built and deployed to transmit the ever-growing amount of digital information, receivers must also be designed to handle this enormous amount of digital data.

In fact, as transmission bandwidth increases and novel data transmission techniques are refined, broadcasters are motivated to pack an ever-increasing amount of data in the transmitted bitstream. In addition to traditional multimedia information, e.g., multimedia programs, broadcasters are able to transmit additional data, e.g., stock quotes, Internet data and the like, along with the traditional multimedia programs. For example, the concept of a "data pipe" within a transport stream is disclosed in US patent application entitled "Method And Apparatus For Establishing A Datapipe In A Digital Transport Stream", with attorney docket SAR 12649 (serial number 09/559,816, filed April 25, 2000), which is commonly owned by the Assignee and herein incorporated by reference.

Thus, as the transport bitstream is continually packed with large amount of data, a complementary receiver must also evolve in complexity to exploit and extract the encoded data. However, a user may not be interested in accessing all the available data in the transport stream or is unwilling to acquire a sophisticated receiver capable of handling sophisticated functions that he or she may not utilize. For example, a user may only wish to acquire stock quotes from a broadcast transport stream on the user's computer, whereas the multimedia programs on the transport stream are not desired by the user or exceed the processing capability of the user's computer.

Therefore, there is a need in the art for an apparatus and method for quickly and inexpensively acquiring data from a bitstream, e.g. of compressed data such as, an MPEG bitstream.

### SUMMARY OF THE INVENTION

In one embodiment of the present invention, a method and apparatus is disclosed that acquires and extracts digital data from a bitstream, e.g., an MPEG-2 bitstream, that is modulated in an 8 VSB, Quadrature Amplitude Modulation (QAM) or Quadrature Phase-Shift Keying (QPSK) format. The embodiment of the invention is made receptive to any of these formats using appropriate application software, supplied and controlled by a personal computer (PC) or resident software on the receiver system. The embodiment of the present invention efficiently parses the extracted digital information in order to store only the pertinent bytes on a hard storage medium or a personal computer (PC).

One embodiment of the present invention is implemented as a receiver system in cooperation with a host, e.g. a PC. The demodulation of the received signals by the embodiment provides digitized MPEG-2 formatted information, e.g. video, audio, and data as Packetized Elementary Streams (PES). The PES contains several programs, program guides, program tables and maps, each of which is identified by unique packet/program identification (PID) labels. The embodiment decodes the MPEG-2 data, where it is stored on a hard medium or a PC through a USB or parallel interface. The data is separated using the PIDs and other identifications, where the data can be accessed later from the storage medium or the PC.

The embodiment provides a flexible design that allows the reconfiguration of the "data receiver" by software. For example, the type of modulation, number of programs, ports and devices to be accessed, and the storage medium are programmable via the host.

Applications of the present invention include but are not restricted to receiving information from a broadcast station, cable network, or satellite. Thus, the invention enables the reception of data in a digital transport stream very efficiently, while using minimal bandwidth.

### BRIEF DESCRIPTION OF THE DRAWINGS

The teachings of the present invention can be readily understood by considering the following detailed description in conjunction with the accompanying drawings, in which:
FIG. 1 depicts a block diagram of an illustrative receiver system of the present invention;
FIG. 2 depicts a block diagram of an illustrative decoder subsystem of the present invention;
FIG. 3 depicts a block diagram of the architecture of an illustrative decoder of the present invention; and
FIG. 4 illustrates a block diagram of the illustrative receiver system of the present invention.

To facilitate understanding, identical reference numerals have been used, where possible, to designate identical elements that are common to the figures.

### DETAILED DESCRIPTION

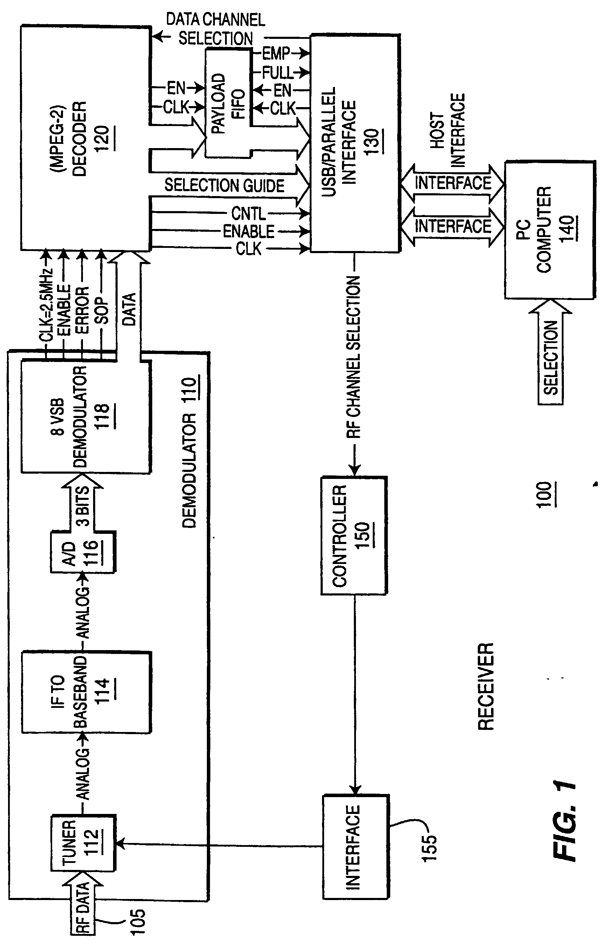

FIG. 1 depicts a block diagram of the architecture of an illustrative receiver system 100 of the present invention. The receiver system 100 consists of a demodulator 110 (e.g., a RF demodulator), a decoder 120 (e.g., an MPEG-2 decoder), a universal serial bus (USB)/Parallel interface 130, a controller 150 and a tuner interface 155. In one embodiment, the receiver system 100 is designed to operate with a host system, e.g., a personal computer (PC) 140.

In operation, the RF demodulator 110 is designed for acquiring a RF signal, once it is commanded (or programmed) to tune to a particular RF channel via the tuner interface 155 by the host PC 140. The controller 150 receives input command information which may represent a desired specific broadcast channel or it might be non-specific as in "channel up" or "channel down". The controller 150 has the required code sequences necessary to program tuner 112 to an appropriate RF frequency representing the desired broadcast channel. For example, tuner 112 may receive the code sequences on a simple 2-wire interface. The name given to this approach is "I2C" for Inter-IC communication. Interface 155 can be the I2C bus master and tuner 112 can be the I2C bus slave. Alternatively, controller 150 may include the I2C bus master function and Interface 155 may be voltage level translators as would be required if controller 150 and tuner 112 were operating on different voltages.

More specifically, the demodulator 110 comprises a tuner 112, an IF (Intermediate Frequency) to baseband converter 114, an analog-to-digital (A/D) converter 116, and an 8 VSB (Vestigial Sideband) demodulator 118. The demodulator 110 employs the tuner 112 to convert a RF signal into an intermediate frequency (IF) signal. The RF signals can be received from a variety of sources including broadcast stations, cable networks or satellites. The tuner 112 is controlled via an interface 155 from the PC by a controller 150 that receives specific commands through an USB or parallel interface module 130. Specific RF channels (i.e., RF frequencies) can be tuned by the commands from the PC. The IF frequency is lower than the RF, and is generally kept constant. In some modulation formats, the bandwidth of the IF may vary, but the center frequency of the IF is generally maintained to be constant. The tuner will include many components, including filters for the RF and IF sections or modules.

After the RF down-conversion to an IF, the IF to baseband converter 114 converts the IF signal to a baseband signal. The baseband signal is at a low frequency, so as to enable the analog-to-digital converter 116 to perform the analog-to-digital (A/D) conversion. This A/D conversion converts all the analog signals to a digital format. The A/D conversion uses a 3-bit resolution that is sufficient for 8 VSB modulation/demodulation methods. It should be noted that lower or higher bit resolutions may be used for other modulation schemes.

An 8 VSB demodulator 118 demodulates the digitized signals, and delivers the demodulated data, e.g., MPEG-2 data, to the internal data-bus of the system. The data-bus transfers the data to the MPEG decoder 120. It should be noted that depending on the modulation scheme used, a QAM or QPSK demodulator can be alternatively used to convert the digitized signals to an MPEG-2 format. Finally, application software can be designed to select the demodulator type (e.g., VSB, QAM or QPSK).

One application of the receiver system 100 is the reception and demodulation of electrical signals that are in the form of bitstreams used in digital television transport streams. The MPEG transport bitstreams carry associated programs, usually comprised of Packetized Elementary Streams (PES) of video, audio and data.

In digital television broadcasts, the MPEG transport bitstream can integrate multiple separate programs, with each program containing arbitrary combinations of video, audio, and data, for modulation in a single transmission channel or frequency. This capability is defined as "multiple programs per channel". It differs from conventional analog television channels, which traditionally used a single program per channel, allowing tuning of a television set by simply changing the frequency or channel received by the set. However, using an embodiment of the present invention, one can tune the receiver in a multiple program per channel environment, where both frequency and program can be independently selected. The process is applicable to any digital bitstream, including those carrying high definition and standard definition video and program audio. Thus, although the present invention is described using MPEG transport streams, the present invention can be adapted to operate on other bitstream formats, e.g., ATSC, Digital Video Broadcast (DVB) and the like.

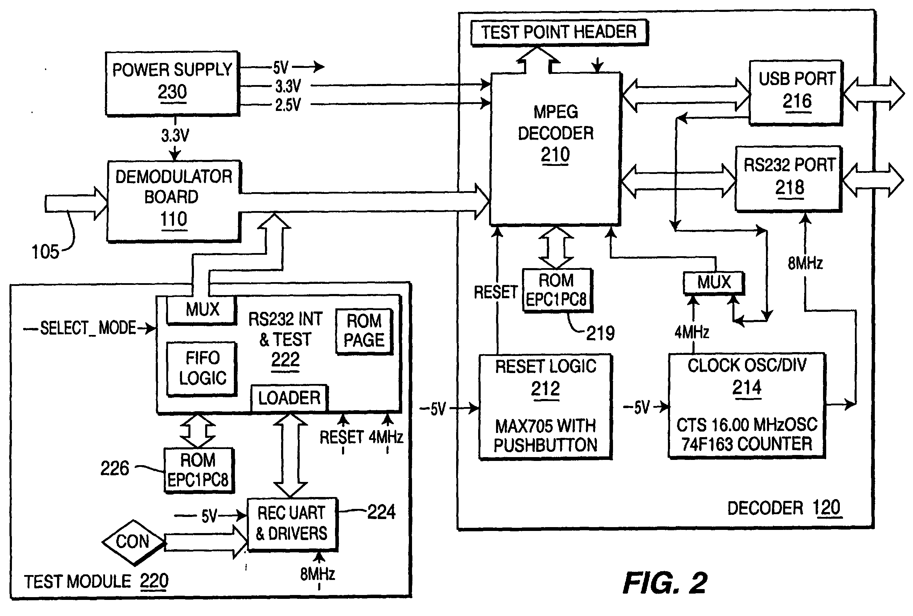

FIG. 2 depicts a block diagram of an illustrative decoder 120 and associated subsystem of the present invention. Specifically, FIG. 2 shows the detailed block diagram of a decoder system 120 having an MPEG decoder 210, a reset logic module 212, a clock/oscillator module 214, an USB port 216, a RS232 port 218 and a Read Only Memory (ROM) 219. The ROM 219 contains configuration data that is recalled when the MPEG decoder 210 is initially powered up or is reset via reset logic module 212. The clock/oscillator 214 provides the clocking signal to operate the MPEG decoder. Specifically, a 16 MHz crystal is provided on the board, and all the system clocks are derived from this oscillator. The clock circuitry generates the 8 MHz universal asynchronous receiver transmitter (UART) clock as well as the 4 MHz required by the Altera EPLD (Electronically PLD). The reset circuit will allow the system (or processing sequence) to start at a predefined state. It should be noted that although the present decoder 120 is illustrated in separate modules, the functions performed by these modules can be combined.

The MPEG bitstream comprises video, audio and data in a digital format. The relative contents of the video, audio, and data may change from instant to instant. Each PES is identified with a Program/Packet ID (PID). The MPEG transport stream decoder (TSD) demultiplexes the data packets from the aggregate bitstream by decoding the PIDs in the transport stream packet headers.

In operation, broadcast data on path 105 is received into the demodulator 110 (illustrated as a circuit board in FIG. 2). The demodulated data (e.g., an MPEG transport stream) is received by the MPEG decoder 210 for processing. The desired data packets within the transport stream are selected and formatted before being forwarded to a host via an output port. In one embodiment of the present invention, two different output ports, an USB port 216 and an RS 232 port 218, are provided.

The RS232 port can be used to transfer information at low speeds to a large data storage medium. The USB port can be used for transferring high-speed data. The decoded digital signals (data, video or audio) are then transferred to a hard storage device or a PC using a universal serial bus (USB) or parallel interface.

It should be noted that the demodulator board interface 110 has the capability to accept unmodulated signal. This enables the embodiment to be used in applications where the program information is not modulated in the VSB, QAM or QPSK formats, but is already available in digital formats. This situation may arise when the present embodiment is connected to a device such as, but is not restricted to a Camcorder, where the information may be transferred directly to the MPEG-2 decoder without having to go through the RF demodulator.

Additionally, an optional test module 220 is deployed to provide testing capability to the MPEG decoder 210. Specifically, test module 220 comprises an RS 232 interface and test module 222, a driver module (REC UART) 224 and a ROM 226.

In operation, configuration data for the RS 232 interface and test module 222 is stored on the ROM 226, which is loaded into the test module during startup. Once configuration data is properly loaded, a test bitstream stored on the RS 232 interface and test module 222 (e.g., stored within the "ROM page") can be forwarded to the MPEG decoder 210 instead of the actual transport stream. The test bitstream is tasked with verifying the various functions of the MPEG decoder to ensure that the decoder is operating properly.

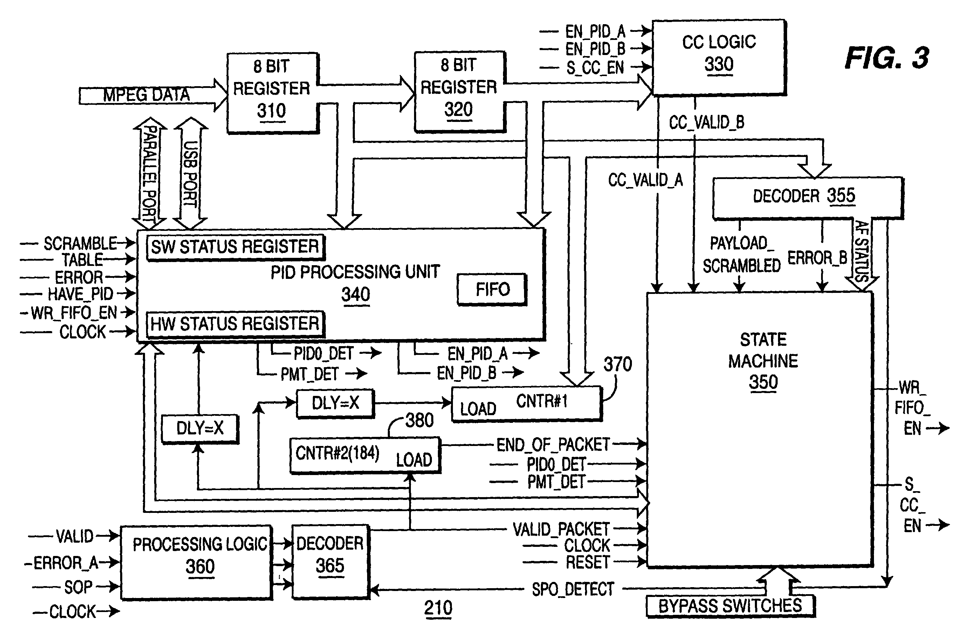

More specifically, the decoder includes a self-test Altera chip (e.g., a 10K50E) that will input a digital transport stream either from an RS232 port or resident on the Altera PLD (Programmable Logic Device). The test transport stream will test the functionality that is shown in FIG. 3 below.

Additionally, the test module 220 provides a driver module 224 to accept additional test bitstreams (e.g., into the "FIFO logic") to be loaded onto the RS 232 interface and test module 222. This provides flexibility and additional debugging capability.

FIG. 3 shows the MPEG-2 decoder architecture that is used to decode data from the incoming bitstream. Specifically, each PES is assigned a separate 13-bit PID label by the transport stream encoder. In general, an electronic program guide is sent in packets with a reserved PID. The entries in the program guide are channel and event descriptors that point to entries in a Program Association Table (PAT), which entries then indirectly point to entries in a Program Map Table (PMT) where the PIDs for the selected video, and associated audio and data are listed.

Specifically, the MPEG-2 decoder architecture uses 2 eight-bit registers 310 and 320 to acquire the PID values. Thus, the PID processing unit 340 can quickly identify PIDs that are associated with video and audio packets which, in turn, are quickly disposed of (deleted or stored) in accordance with a particular application. The state machine 350 controls the operation of the chip ensuring the proper sequence through the transport stream. The counters 370 and 380 are used to keep track of the total number of bytes in the MPEG packet and the adaptation field. The decoder 355 is tasked with decoding the adaptation field information, whereas the decoder 365 is tasked with decoding the status of the received packet from the processing logic 360, i.e., whether the packet is a valid packet or is a corrupted packet. The cc logic 330 is tasked with monitoring the continuity counter (cc) information of the desired data packet.

It should be noted that in the preferred embodiment, the MPEG decoder 210 is an MPEG data only decoder. Specifically, if data is the only interest for a particular receiver system, the numerous video and audio packets that form the transport stream can be quickly disposed of, i.e., deleting such packets or simply storing these packets for later processing. A significant cost saving is realized in reducing the complexity of the overall receiver system, since the complexity of the MPEG decoder is greatly reduced. Namely, the data only decoder is only required to identify the type of information (video, audio, or data), but is not required to have the capability to process the video and audio packets. The processing speed of the data only decoder is also greatly increased, since no computational cycles are used to process the video and audio information.

This allows an inexpensive and fast receiver system to be deployed with a host or PC. Namely, the data only MPEG decoder expends just enough processing to determine the PIDs of relevant data packets, e.g., data packets contain stock quotes, where all other non-relevant packets can be dropped or stored. Since video and audio processing capabilities generally exist within the host, the user of the PC can retrieve such computational intensive information at a later time without impacting the reception capability of the overall receiver system.

Another advantage of the present embodiment is the ability to allow the host to use software to select or control the channel where the desired data is to be received. For example, if a "data pipe" is established by a broadcaster from which data only information is placed in the transport stream, then the user can simply select this channel for the receiver and allow the host to collect the relevant data packets.

Another aspect of the present embodiment is the ability to store the relevant data for later retrieval. Namely, depending on the available bandwidth of a transmission medium, a broadcaster may dedicate the bulk of the available bandwidth to the transmission of video and audio information instead of data information. The data information may be received by the host in an non-uniform time frame, i.e., the data will be sent as the available bandwidth is made available. Thus, a user may simply turn on the host and allow the host to collect data for later retrieval. The storage device can be a standalone device coupled to the receiver or simply the disk drive of a PC. This allows a user to turn on the host (or program the host) to start the reception process a few hours before the actual data is needed, e.g., turning the computer on at night and having the computer gather oversea financial market information which is then made available to the user in the morning.

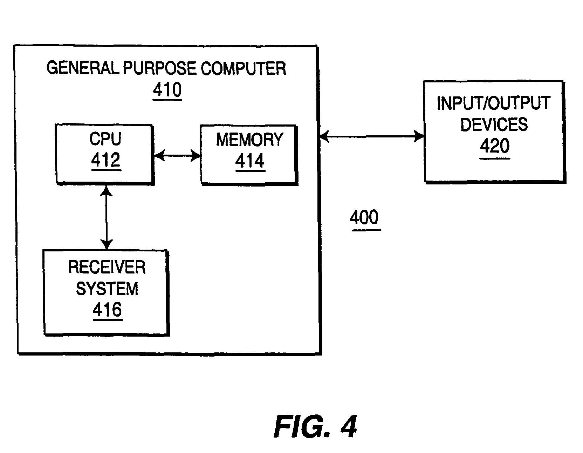

FIG. 4 illustrates a block diagram of an illustrative data receiver system 400 of the present invention. The data receiver system comprises a general purpose computer 410 and various input/output devices 420. The general purpose computer comprises a central processing unit (CPU) 412, a memory 414 and receiver system 416 for extracting and parsing the digital data information to store only the pertinent bytes on a hard storage medium of the general purpose computer 410.

In the preferred embodiment, the receiver system 416 is the receiver system 100 as discussed above. The receiver system 416 can be a physical device, which is coupled to the CPU 412 through a communication channel. Alternatively, the receiver system 416 can be represented (in part or in whole) by a software application that is loaded from a storage device and resides in the memory 414 of the computer. As such, the illustrative receiver system 416 and associated methods and/or data structures of the present invention can be stored on a computer readable medium. In other words, an embodiment of the present invention can be adapted where the various processing modules as disclosed above can be replaced by using a, preferably very powerful, centralized processing system.

The computer 410 can be coupled to a plurality of input and output devices 420, such as a keyboard, a mouse, a camera, a camcorder, a video monitor, any number of imaging devices or storage devices, including but not limited to, a tape drive, a floppy drive, a hard disk drive or a compact disk drive.

Although various embodiments which incorporate the teachings of the present invention have been shown and described in detail herein, those skilled in the art can readily devise many other varied embodiments that still incorporate these teachings.

Thus the invention provides a computer program product arranged to carry out a signal processing method as described hereinabove when run on a signal processor. The invention also provides a computer program product which when run on a signal processor operates as a signal processing apparatus as described hereinbefore.

## Claims

1. Apparatus for extracting data information from a broadcast bitstream, said apparatus comprising:
a demodulator for demodulating the broadcast bitstream into a transport stream;
a decoder, coupled to said demodulator, for extracting the data information from said transport stream; and
a storage device, coupled to said decoder, for storing said extracted data for a host.

2. The apparatus of claim 1, wherein said bitstream carries at least said data information along with video or audio information.

3. The apparatus of claim 2, wherein said decoder extracts said data information from said transport stream by identifying at least one packet identifier (PID) associated with said data information.

4. The apparatus of claim 3, wherein said decoder only extracts said data information from said transport stream into said storage device and all other data in the transport stream are deleted.

5. The apparatus of claim 1, wherein said demodulator is tuned to a channel selected by said host.

6. The apparatus of claim 5, wherein said host is a personal computer.

7. The apparatus of claim 1, further comprising a test module, coupled to said decoder, for providing a test bitstream for testing said decoder.

8. Method for extracting data information from a broadcast bitstream, said method comprising the steps of:
(a) demodulating the broadcast bitstream into a transport stream;
(b) extracting the data information from said transport stream; and
(c) storing said extracted data into a storage device for a host.

9. The method of claim 8, wherein the broadcast bitstream is modulated in Quadrature Amplitude Modulation (QAM) format.

10. A computer-readable medium having stored thereon a plurality of instructions, the plurality of instructions including instructions which, when executed by a processor, cause the processor to perform the steps comprising of:
(a) demodulating the broadcast bitstream into a transport stream;
(b) extracting the data information from said transport stream; and
(c) storing said extracted data into a storage device for a host.
